# EUROPÄISCHE PATENTSCHRIFT

(11) **EP 0 334 031 B1**
(45) Veröffentlichungstag und Bekanntmachung des Hinweises auf die Patenterteilung: **26.10.1994**
(21) Anmeldenummer: 89102952.2
(22) Anmeldetag: 21.02.1989
(51) Int. Cl.: G05D 3/14, F15B 9/17

(54) **Regeleinrichtung für ein zweistufiges Ventil**
Regulating device for a two-stage hydraulic valve
Régulateur pour vanne à deux étages

(30) Priorität: 25.03.1988 DE 3810110
(43) Veröffentlichungstag der Anmeldung: 27.09.1989
(73) Patentinhaber: ROBERT BOSCH GMBH, 70442 Stuttgart (DE)
(72) Erfinder: Erhard, Norbert, Dipl.-Ing., D-8520 Erlangen (DE); Huber, Friedemann, Dipl.-Ing., D-7000 Stuttgart 1 (DE); Pfuhl, Berthold, Dipl.-Ing., D-7145 Markgröningen (DE)

(56) Entgegenhaltungen:
- EP-A- 0 070 957
- EP-A- 0 111 064
- DE-A- 3 418 969
- DE-A- 3 532 931
- DE-B- 1 146 757
- GB-A- 908 347
- US-A- 3 015 313

## Beschreibung

### Stand der Technik

Die Erfindung betrifft eine Regeleinrichtung für ein zweistufiges Ventil gemäß der Gattung des Hauptanspruchs.

Bei Stetigventilen mit größeren Volumenströmen ist die Stellkraft aufgrund der Strömungs- und Reibungskraft so groß, daß eine direkte Betätigung über einen Magnet nicht mehr möglich ist. Aus diesem Grund ist es bekannt, diese Ventile zweistufig auszubauen, wobei ein Hauptstufenventil durch ein Vorstufenventil kleiner Nennweite vorgesteuert wird. Die Lageregelung der Hauptstufe dieser Ventile wird üblicherweise mit einem Regler, der proportionales Verhalten hat, ausgeführt.

Dies hat zur Folge, daß die Dynamik der Hauptstufe deutlich kleiner als die Dynamik der Vorstufe ist. Aufgrund der Stabilitätsbedingung ist daher die mögliche Verstärkung im Regler beschränkt und damit das statische und dynamische Verhalten für verschiedene Einsatzbereiche nicht ausreichend.

Ferner ist aus der US-PS 3 015 313 eine Regeleinrichtung für einen hydraulischen Stellmotor bekannt, der von einem zweistufigen Stetigventil angesteuert wird. Bei dieser 3-stufigen Regeleinrichtung werden einem Zustandsregler weg-, geschwindikeits- und beschleunigungsabhängige Signale zurückgeführt, wozu jeder Stufe ein Wegaufnehmer zugeordnet ist und diese Signale über Gewichtungsschaltungen zusammengeführt werden. Obwohl diese Regeleinrichtung bereits gute statische und dynamische Verhaltenswerte ermöglicht, eignet sie sich weniger für eine zweistufige Ventilbauweise mit einem Vorstufenlageregler.

Weiterhin ist aus der GB-PS 908 347 eine Regeleinrichtung für einen hydraulischen Stellmotor bekannt, der von einem einstufigen Stetigventil angesteuert wird. Diese 2-stufige Regeleinrichtung hat einen Zustandsregler, dem ebenfalls weg-, geschwindigkeits- und beschleunigungsabhängige Signale zugeführt werden, wobei dem Stetigventil zwei Meßwertaufnehmer zugeordnet sind. Auch diese Regeleinrichtung eignet sich schlecht für ein zweistufiges Ventil mit einem Vorstufenlageregler.

Aus der DE 34 18 969 A1 ist es ferner bekannt, bei einem Proportionalventil mit Regelverstärker zur Erhöhung der Dynamik des Ventils dem Regler mit PI-Verhalten neben einer Geschwindigkeitsrückführung eine Beschleunigungsrückführung zuzuordnen. Auch dieser Zustandsregler eignet sich nur für einstufige Proportionalventile, die keinen unterlagerten Vorstufenregler aufweisen.

### Vorteile der Erfindung

Die erfindungsgemäße Regeleinrichtung für ein zweistufiges Stetigventil der eingangs genannten Gattung hat mit den kennzeichnenden Merkmalen des Hauptanspruch demgegenüber den Vorteil, daß aufgrund der Berücksichtigung der Zustandsgrößen in einem Zustandsregler das statische und dynamische Verhalten verbessert wird. Durch eine höhere Verstärkung wird ein System mit höherer Steifigkeit erhalten, das damit auch unempfindlicher gegen Drift an der Vorsteuerstufe ist. Höhere Dynamik und bessere Stabilität erweitern die Einsatzmöglichkeiten dieser Ventile. Der Schaltungsaufwand dazu ist gering und eine Anpassung an unterschiedliche Gegebenheiten einfach durchführbar.

Durch die in den Unteransprüchen aufgeführten Maßnahmen sind vorteilhafte Weiterbildungen und Verbesserungen der im Hauptanspruch angegebenen Regeleinrichtung möglich. Eine besonders vorteilhafte Ausführung ergibt sich dann, wenn als Lageregler für die Vorstufe ein an sich bekannter PID-Regler (DE-OS 34 18 969) verwendetwird, dessen Proportionalglied und Integrierglied eingangsseitig verbunden sind und den Sollwerteingang des PID-Reglers bilden. Weiter ist das Lagesignal der Vorstufe als Istwertsignal gemeinsam dem Proportional-, Integral- und Differenzierglied zugeführt. Bei Verwendung eines solchen Reglers werden die für den Zustandsregler erforderlichen Zustandsgrößen ohne weitere Maßnahmen zur Verfügung gestellt, so daß der Schaltungsaufwand hierbei minimal wird.

### Zeichnung

Es zeigen:
Figur 1 die Darstellung einer konventionellen Regelung an einem zweistufigen Ventil nach dem Stand der Technik,
Figur 2 ein Blockschaltbild einer konventionellen Regelung entsprechend der Figur 1,
Figur 3 ein Schema einer Zustandsregelung in allgemeiner Form an einem zweistufigen Ventil,
Figur 4a bis 4d Schemadarstellungen für die unterschiedlichen Möglichkeiten zur Erzeugung der Signale von notwendigen Zustandsgrößen,
Figur 5 Ausführung eines Zustandsreglers unter Verwendung eines an sich bekannten Lagereg-2 lers für die Vorstufe.

### Beschreibung von Ausführungsbeispielen

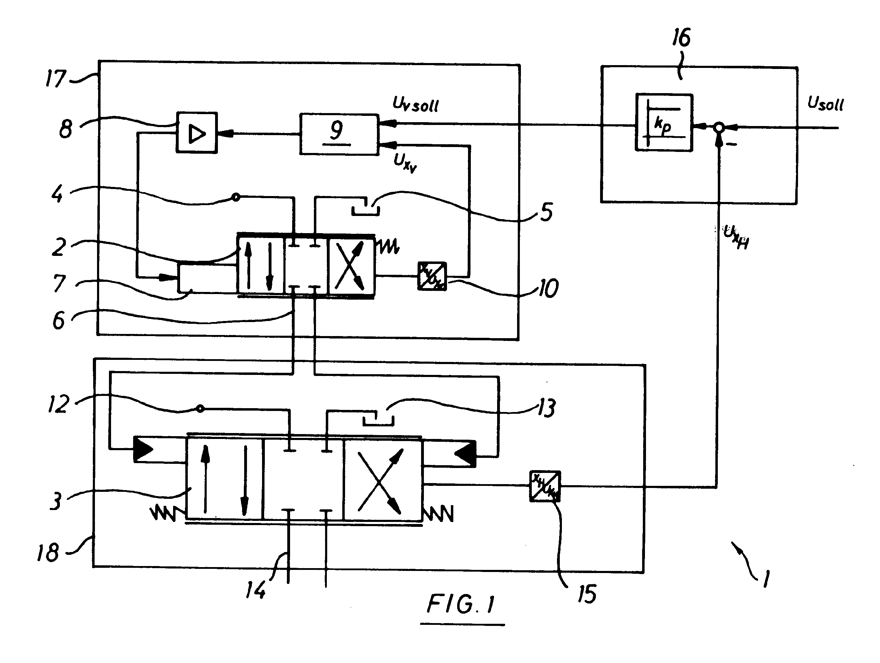

In Figur 1 ist ein zweistufiges Stetigventil 1 dargestellt, mit einem ersten Stetigventil als Vorstufenventil 2 und einem zweiten Stetigventil als Hauptstufenventil 3.

Das Vorstufenventil 2 ist eingangsseitig an eine (schematisch dargestellte) Vorstufen-Versorgungspumpe 4 und einen Tank 5 und ausgangsseitig über Leitungen 6 mit den Steuerteilen des Hauptstufenventils 3 verbunden. Das Vorstufenventi 2 wird über einen Magnet 7 gesteuert, der über eine Endstufe 8 mit dem Ausgang eines Vorstufenlagereglers 9 verbunden ist. Die Lage des Stellglieds, beispielsweise eines Ventilschiebers im Vorstufenventil 2, wird mit Hilfe eines Wegaufnehmers 10 ermittelt, der die Weggröße Xᵥ in ein entsprechendes, elektrisches Lagesignal Uᵥ umsetzt. Dieses Lagesignal Uᵥwird als Istwertsignal dem Vorstufenlageregler 9 zusammen mit einem Sollwert U_{vSoll} für die Vorstufe zugeführt.

Eingangsseitig ist das Hauptstufenventil 3 an eine Hauptstufen-Versorgungspumpe 12 und einen Tank 13 und über Ausgangsleitungen 14 an nachgeschaltete Geräte und Verbraucher angeschlossen. Über einen weiteren Wegaufnehmer 15 wird die Lage des Stellglieds im Hauptstufenventil 3 bzw. eine Weggröße X_{H} ermittelt und in ein entsprechendes Hauptstufen-Lagesignal U_{XH} umgesetzt. Dieses Lagesignal U_{XH} wird als weiteres Istwertsignal einem konventionellen Lageregler 16 mit Proportionalverhalten zugeführt. Dabei wird ein Soll-Istwert-Vergleich zwischen einem vorgegebenen Sollwert U_{Soll} und dem Hauptstufenlagesignal U_{XH} durchgeführt. Die dabei ermittelte Regelabweichung wird mit einem Verstärkungsfaktor kp gewichtet.

Dieses ermittelte Signal (Stellsignal des Hauptstufenreglers) wird als Sollwertsignal U_{VSoll} dem Lageregler 9 zugeführt.

Eine solche konventionelle Anordnung führt oft dazu, daß das statische und dynamische Verhalten der Regelung für bestimmte Einsatzfälle nicht ausreicht.

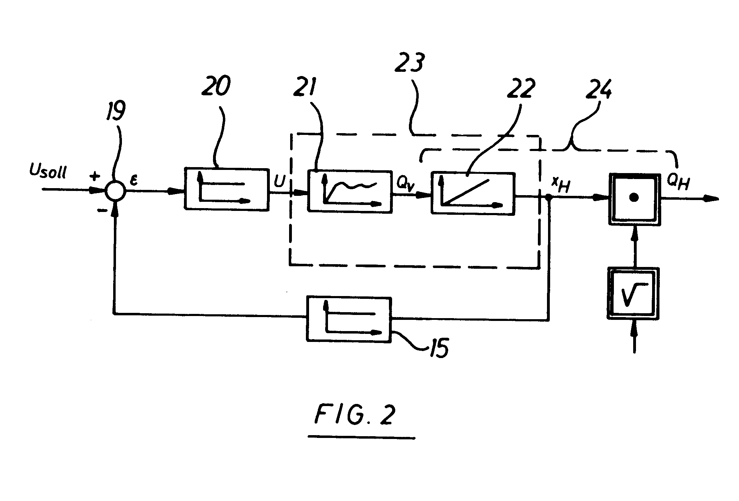

In Figur 2 ist eine systemanalytische Darstellung des konventionellen Regelkreises nach Figur 1 angegeben. Dabei wird der Block 17 in Figur 1 durch PT₂-Verhalten und der Block 18 durch I-Verhalten (integrierendes Verhalten) beschrieben.

In Figur2 ist die Vergleicherschaltung 19 fürden Sollwert U_{Soll} und das Hauptstufen-Lagesignal dargestellt, wobei die ermittelte Regelabweichung dem Proportionalregler 20 zugeführt wird. Dessen Ausgang ist mit dem Regeleingang des als Block 21 schematisch dargestellten, lagegeregelten Vorstufenventils verbunden. Mit 22 ist der mechanische Teil der Hauptstufe bezeichnet, der dem Block 21 nachgeschaltet ist. Der strichliert eingerahmte Teil 23 stellt die Regelstrecke und die Klammer 24 die Hauptstufe dar. Die Lage des Stellglieds im Hauptstufenventi ist über den Wegaufnehmer 15 zum Vergleicher 19 zurückgeführt.

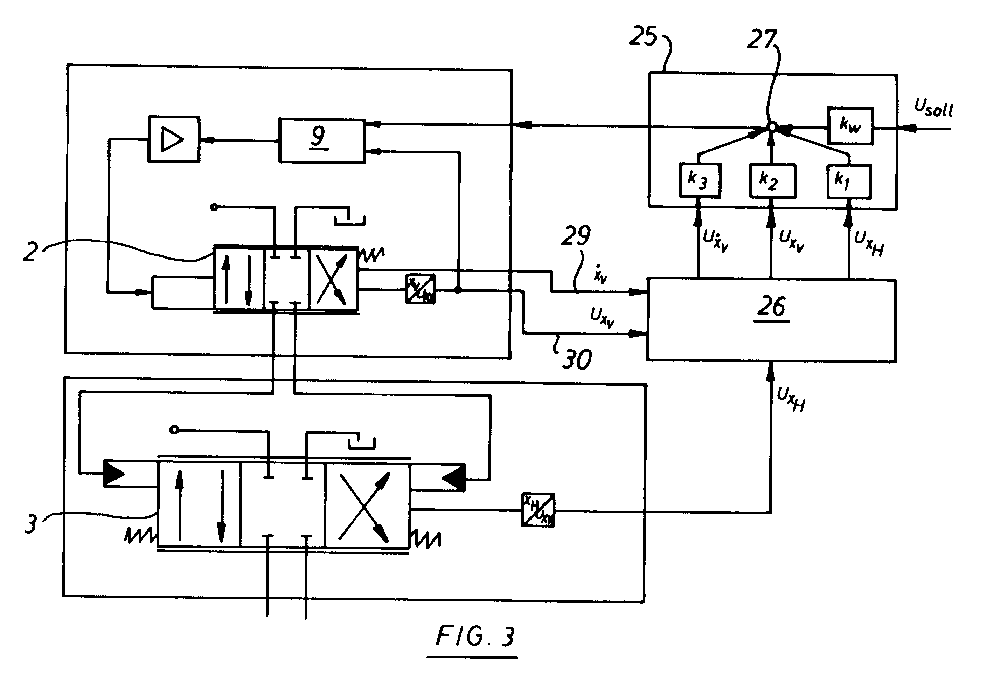

In Figur 3 ist das Schema einer Zustandsregelung in seiner allgemeinen Struktur für ein zweistufiges, lagegeregeltes Stetigventil dargestellt. Für die Regelung ist ein Zustandsregler 25 verwendet, mit dem das statische und dynamische Verhalten der Regelung verbessert werden kann.

Dazu ist es nötig, die systemrelevanten Größen zugänglich zu machen. Eine hinreichende Systembeschreibung wird dadurch erhalten, daß für die Vorstufe ein PT₂-Verhalten angenommen wird, wobei als Zustandsgrößen die Lage des Vorstufenventils und die Geschwindigkeit der Lageveränderung des Vorstufenventils erforderlich sind. Die anschließende Hauptstufe stellt sich als ein in Reihe geschaltetes, integrierendes System dar. Durch dieses integrierende Verhalten wird eine systemtechnisch hinreichende Beschreibung erhalten. Dieses System ist über den Lageregler gekoppelt.

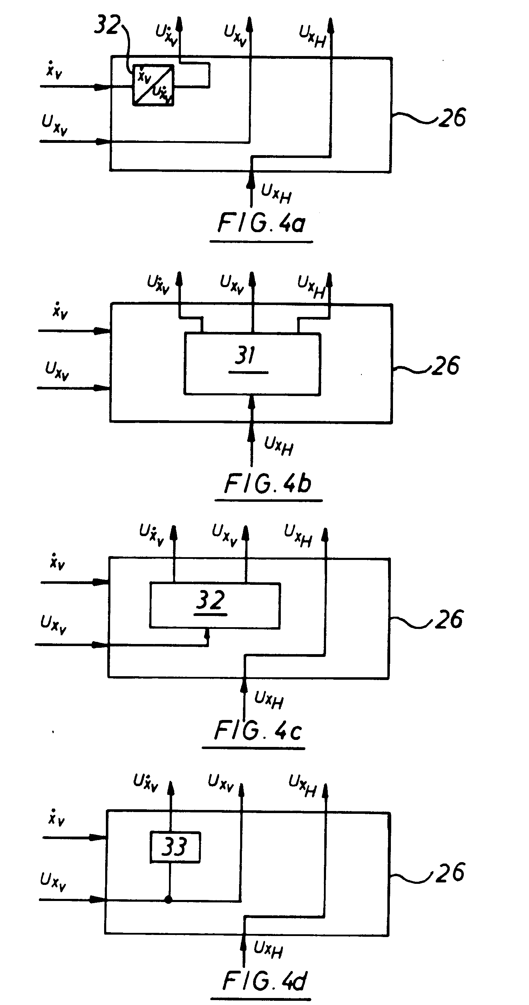

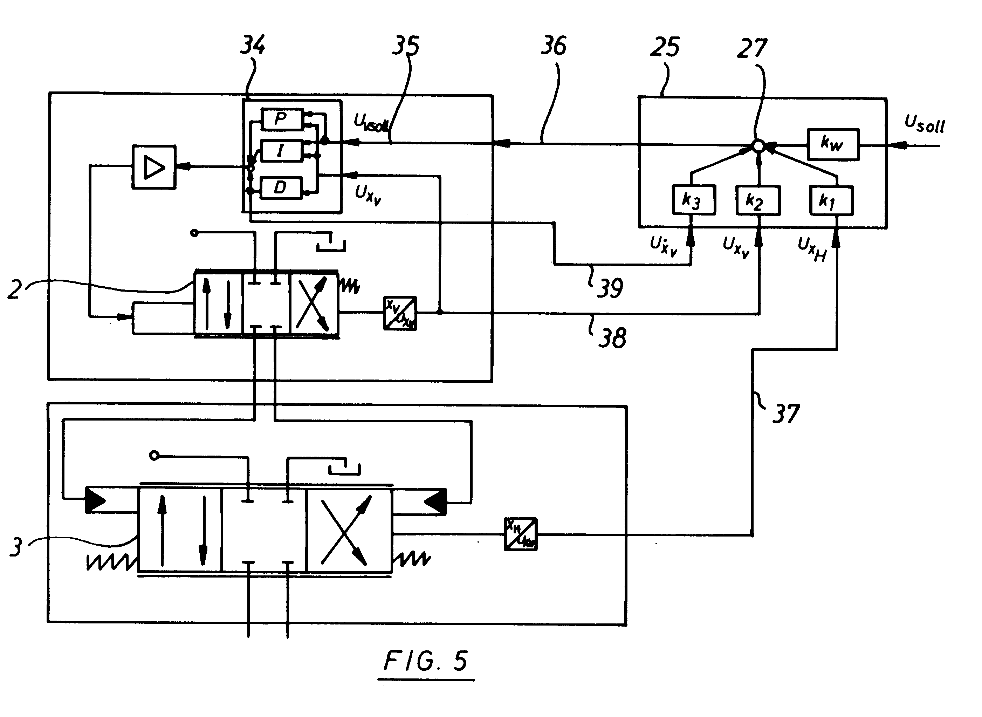

Diese Zustandsgrößen bzw. ihre Signalgrößen sind für die Lage des Vorstufenventils bzw. dessen Stellglied mit Uₓᵥ und für die entsprechende Geschwindigkeit mit U_{XV} bezeichnet. Die Lage des Hauptstufenventils bzw. dessen Stellglieds ist mit U_{XH} bezeichnet. Diese Zustandsgrößen-Signale werden von der Schaltungseinheit 26 zur Verfügung gestellt; die Möglichkeiten dafürwerden anhand der Figuren 4a bis 4d und Figur 5 näher erläutert.

Im Zustandsregler 25 sind Gewichtungsschaltungen K₁, K₂, K₃ enthalten, mit denen die Zustandsgrößen- signale gegeneinander gewichtet werden können. Weiter ist eine Gewichtungsschaltung K_{w} für den Hauptstufensollwert U_{Soll} enthalten. Alle gewichteten Signale werden einer Verknüpfungsschaltung 27 zugeführt. Entsprechend dem Regelsinn werden die Zustandsgrößen der Regelstrecke im allgemeinen im Sinne einer Gegenkopplung in die Verknüpfung eingebracht. Der Ausgang des Zustandsreglers 25 stellt ein gewichtetes Sollwertsignal für den Lageregler 9 der Vorstufe dar.

Die Gewinnung oder Generierung der Zustandsgrößen kann auf unterschiedliche Weise erfolgen, wie dies anhand der Figuren 4a bis 4d dargestellt ist:
Gemäß Figur 4a werden alle Zustandsgrößen meßtechnisch erfaßt mit dem zusätzlichen Aufwand eines Geschwindigkeitssensors 32. Dieser Fall ist auch in Figur 3 eingeschlossen,wo über direkte Meßleitungen 29 und 30 das Geschwindigkeitssignal 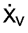 bzw. U 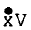 und das Lagesignal Uₓᵥ der Schaltungseinheit 26 zugeführt sind.

Gemäß Figur 4b werden die Zustandsgrößen mit Hilfe eines Zustandsgrößenbeobachters 31 nur aus dem Lagesignal U_{XH} der Hauptstufe ermittelt. Die meßtechnische Erfassung des Lage- und Geschwindigkeitssignals für die Vorstufe ist hierbei nicht erforderlich.

Gemäß Figur 4c wird ein "Teilbeobachter" 32 verwendet. Dabei wird das Lagesignal der Hauptstufe und das Lagesignal der Vorstufe meßtechnisch ermittelt. Für die Anregung des Teilbeobachters wird das Lagesignal der Vorstufe verwendet, wobei der Teilbeobachter zusätzlich zum Lagesignal der Vorstufe auch das entsprechende Geschwindigkeitssignal liefert.

Gemäß Figur 4d werden die Lagesignale Uₓᵥ und U_{xH} gemessen und das Geschwindigkeitssignal U 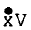 _{V} durch Differenzieren in einem Differenzierglied 33 ermittelt.

In Figur 5 ist die Struktur einer Zustandsregelung an einem zweistufigen Ventil dargestellt, die dadurch besonders einfach wird, daß als Lageregler für die Vorstufe ein an sich bekannter Lageregler (nach DE-OS 34 18 969) verwendet wird. Das Lagesignal Uₓᵥ des Vorstufenventils 2 wird als Lage-Istwertsignal allen drei Gliedern des PID-Reglers 34 über deren verbundene Istwerteingänge zugeführt. Die Sollwerteingänge des Proportional- und Integralgliedes sind ebenfalls zu einem gemeinsamen Sollwerteingang 35 verbunden, der über die Leitung 36 mit dem Ausgang des Zustandsreglers 25 verbunden ist.

Das Lagesignal U_{XH} für die Hauptstufe wird ebenso wie bei der konventionellen Regelung erfaßt und dem Zustandsregler über die Leitung 37 zugeführt. Ein zusätzlicher Aufwand ist somit hierzu bei der Verwendung des Zustandsreglers 25 nicht erforderlich.

Das Lagesignal Uₓᵥ für die Vorstufe muß für den Lageregler 34 ebenfalls erfaßt werden und steht somit auch für den Anschluß an den Zustandsregler über die Leitung 38 ohne größeren, weiteren Aufwand zur Verfügung. Ebenso verhält es sich mit dem Geschwindigkeitssignal U 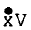 , das nach dem Differenzierglied des PID-Reglers 34 ohne zusätzliche Maßnahmen ohnehin anliegt und über die Leitung 39 dem Zustandsregler zugeführt ist.

Diese Anordnung unter Verwendung des bekannten Lagereglers 34 führt somit dazu, daß die benötigten Zustandsgrößen ohne weiteren Aufwand ohnehin vorliegen und somit die Schaltungseinheit 26 nach Figur 3 oder den Figuren 4a bis 4d entfallen kann. Somit wird ein einfacher und preisgünstiger Aufbau erhalten.

## Patentansprüche

1. Regeleinrichtung für ein zweistufiges Ventil mit einem ersten Stetigventil, genannt Vorstufenventil (2), das mit Hilfe eines ersten Lagereglers, genannt Vorstufenlageregler (9;34) lagegeregelt ist und die Vorstufe bildet und mit einem zweiten Stetigventil, genannt Hauptstufenventil (3), das dem ersten Stetigventil (2) nachgeschaltet ist und von diesem vorgesteuert wird, wobei ein Lagesignal U_{XH} des Hauptstufenventils (5) einem zweiten Lageregler, genannt Hauptstufenregler (16; 25, 26) zugeführt ist, an dem ein Sollwertsignal U_{Soll} vorgebbar ist und dessen Ausgang mit dem Sollwerteingang des Vorstufenlagereglers (9, 39) verbunden ist, dadurch gekennzeichnet, daß der zweite Lageregler als Zustandsregler (25) ausgeführt ist, dem als Zustandsgrößen ein Lagesignal U_{xV} sowie ein Geschwindigkeitssignal U 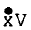 für eine Lageveränderung am Stellglied des Vorstufenventils (2) und zusätzlich das Lagesignal U_{XH} für die Lage des Stellglieds des Hauptstufenventils (3) zugeführt sind, wobei dieses Geschwindigkeitssignal U 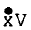 nur aus einem der beiden Lagesignale U_{xV} und U_{XH} ermittelt wird, daß zumindest eines dieser drei Signale U_{xV}, U 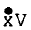 _{V} , und U_{XH} sowie das Sollwertsignal U_{Soll} für die Hauptstufe an Gewichtungsschaltungen (K_{w}, K₁, K₂, K₃) angeschlossen sind, mit denen die Signale U_{Soll}, U_{xH}, U_{xV} und U 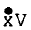 _{V} gegeneinander gewichtet werden können, daß diese Signale U_{Soll}, U_{xH}, U_{xV}, U 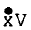 bzw. die über die Gewichtungsschaltungen (K_{w}, K₁, K₂, K₃) gewichteten Signale einer Verknüpfungsschaltung (27) zugeführt sind und daß der Ausgang der Verknüpfungsschaltung (27) als Ausgang des Zustandsreglers (25) mit dem Sollwerteingang des Vorstufenlagereglers (9; 34) verbunden ist.

2. Regeleinrichtung nach Anspruch 1, dadurch gekennzeichnet, daß die Zustandsgrößen (U_{xV}, U 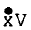 und U_{XH}) der Regelstrecke bzw. deren gewichtete Signale im Sinne einer Gegenkopplung in der Verknüpfungsschaltung (27) verarbeitet werden.

3. Regeleinrichtung nach Anspruch 1 oder 2, dadurch gekennzeichnet, daß nur ein Teil der erforderlichen Zustandsgrößen durch Messung ermittelt werden und der andere Teil über einen Beobachter (Teilbeobachter 32) rechnerisch ermittelt wird.

4. Regeleinrichtung nach Anspruch 3, dadurch gekennzeichnet, daß die erforderlichen Zustandsgrößen nur aus dem Lagesignal (U_{XH}) der Hauptstufe mit Hilfe eines Beobachters (31) ermittelt werden.

5. Regeleinrichtung nach einem der Ansprüche 1 bis 4, dadurch gekennzeichnet, daß die Lagesignale (U_{xV} und U_{XH}) durch Messen ermittelt werden und daß das Geschwindigkeitssignal ( U 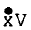 ) durch Differenzieren (Differenzierglied 33) des entsprechenden Lagesignals (U_{xV}) ermittelt wird.

6. Regeleinrichtung nach Anspruch 1 oder 2, wobei in an sich bekannter Weise der Lageregler für die Vorstufe einen PID-Regler enthält, dessen Proportionalglied und Integrierglied eingangsseitig verbunden sind und den Sollwerteingang des PID-Reglers bilden, das Lagesignal der Vorstufe als Istwertsignal dem Proportional-, Integral- und Differenzierglied zugeführt ist und dessen Reglerausgang die Lage des Vorstufenventils steuert, dadurch gekennzeichnet, daß das Lagesignal (U_{xV}) des Vorstufenventils (2) dem Zustandsregler (25) und das am Ausgang des Differenziergliedes (D) auftretende Signal als Geschwindigkeitssignal ( U 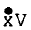 _{V} ) des Vorstufenventils (2) dem Zustandsregler (25) als Zustandsgrößensignale zugeführt sind und daß der Sollwerteingang (35) des PID-Reglers (34) mit dem Ausgang des Zustandsreglers (25) bzw. der Verknüpfungsschaltung (27) verbunden ist.

## Claims

1. A control device for a two-stage valve having a first continuous valve, called the primary stage valve (2), which is position-controlled with the aid of a first position controller, called the primary stage position controller (9; 34), and forms the primary stage and having a second continuous valve, called the main stage valve (3), which is connected downstream of the first continuous valve (2) and is pre-controlled by it, a position signal U_{XH} being fed from the main stage valve (3) to a second position controller, called the main stage controller (16; 25, 26), on which a desired value signal Uₛₒₗₗ may be preset and the output of which is connected to the desired value input of the primary stage position controller (9, 34), wherein the second position controller is designed as a state controller (25), to which are fed as state variables a position signal Uₓᵥ and a velocity signal Uxᵥ for a position change on the regulating element of the primary stage valve (2) and, in addition, the position signal U_{XH} for the position of the regulating element of the main stage valve (3), this velocity signal U 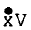 being determined from only one of the two position signals U_{xV} and U_{XH}, wherein at least one of these three signals Uₓᵥ, U 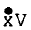 and U_{XH} and the desired value signal Uₛₒₗₗ for the main stage are connected to weighting circuits (K_{w}, K₁, K₂, K₃), with which the signals Uₛₒₗₗ, U_{xH}, U_{xY} and U 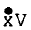 , can be mutually weighted, wherein these signals Uₛₒₗₗ, U_{XH}, U_{xV}, U 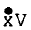 or the signals weighted by the weighting circuits (K_{w}, K₁, K₂, K₃) are fed to a logic circuit (27) wherein the output of the logic circuit (27) is connected to the desired value input of the primary stage position controller (9; 34) as output from the state controller (25).

2. The control device as claimed in claim 1, wherein the state variables (Uₓᵥ, U_{xV} and U_{XH}) of the control path or their weighted signals are processed in the logic circuit (27) in the negative feedback sense.

3. The control device as claimed in claim 1 or 2, wherein only some of the necessary state variables are determined by measurement and the remainder are determined by calculation via an observer (partial observer 32).

4. The control device as claimed in claim 3, wherein the necessary state variables are determined only from the position signal (U_{xH}) of the main stage with the aid of an observer (31).

5. The control device as claimed in one of claims 1 to 4, wherein the position signals (Uₓᵥ and U_{xH}) are determined by measurement and wherein the velocity signal (U 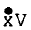 ) is determined by differentiation (differentiation element 33) of the corresponding position signal (Uₓᵥ).

6. The control device as claimed in claim 1 or 2, the position controller for the primary stage containing a PID-controller in a way known per se, whose proportional element and integrating element are connected on the input side and form the desired value input of the PID-controller, the position signal of the primary stage is fed as actual value signal to the proportional, integral and differentiation elements, and the output of the PID-controller controlling the position of the primary stage valve, wherein the position signal (U_{xV}) of the primary stage valve (2) is fed to the state controller (25), and the signal occurring at the output of the differentiation element (D) is fed to the state controller (25) as velocity signal (U 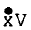 ) of the primary stage valve (2), both as state variable signals, and wherein the desired value input (35) of the PID-controller (34) is connected to the output of the state controller (25) or the logic circuit (27).

## Revendications

1. Régulateur pour une vanne à deux étages avec une première vanne en continu, appelée vanne d'étage préliminaire (2), qui est régulée en position à l'aide d'un premier régulateur de position, appelé régulateur de position d'étage préliminaire (9 ; 34) et constitue l'étage préliminaire et avec une deuxième vanne en continu, appelée vanne d'étage principal (3), qui est montée à la suite de la première vanne en continu (2) et est pilotée par celle-ci, un signal de position UxH de la vanne d'étage principal (3) étant appliqué à un deuxième régulateur de position, appelé régulateur d'étage principal (16, 25, 26), sur lequel est pré- indiqué un signal de valeur de consigne Uₛₒₗₗ et dont la sortie est connectée à l'entrée de valeur de commande du régulateur de position de l'étage préliminaire (9, 34), caractérisé en ce que le deuxième régulateur de position est réalisé en régulateur d'état (25), auquel sont appliqués, comme grandeurs d'état, un signal de position Uₓᵥ ainsi qu'un signal de vitesse ^{U}xv pour un changement de position sur le composant de réglage de la vanne d'étage préliminaire (2) et en plus le signal de position U_{XH} pour la position du composant de réglage de la vanne d'étage principal (3), ce signal de vitesse Uₓᵥ étant déterminé seulement à partir d'un des deux signaux de position Uₓᵥ et U_{XH}, en ce qu'au moins un de ces trois signaux Uₓᵥ, U_{xV} et U_{XH} ainsi que le signal de valeur de consigne Uₛₒₗₗ pour l'étage principal sont raccordés aux circuits de pondération (Kw, K1, K2, K3), par lesquels les signaux Uₛₒₗₗ, U_{XH}, U_{xV} et U_{xV} peuvent être pondérés mutuellement, en ce que ces signaux Uₛₒₗₗ, U_{XH}, U_{xV}, U 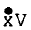 ou les signaux pondérés par les circuits de pondération (KW, K1, K2, K3) sont amenés à un circuit combinatoire (27) et en ce que la sortie du circuit combinatoire (27) est reliée comme sortie du régulateur d'état (25) à l'entrée de valeur de consigne du régulateur de position d'étage préliminaire (9, 34).

2. Régulateur selon la revendication 1, caractérisé en ce que les grandeurs d'état (Uₓᵥ, U 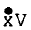 et U_{xH}) du système asservi ou leurs signaux pondéré sont traités dans le sens d'un contre-couplage dans le circuit combinatoire (27).

3. Régulateur selon les revendications 1 ou 2, caractérisé en ce que seule une partie des grandeurs d'état nécessaires sont déterminée par mesure et l'autre partie est déterminée par un observateur (observateur partiel 32) par le calcul.

4. Régulateur selon la revendication 3, caractérisé en ce que les grandeurs d'état nécessaires ne sont déterminées qu'à partir du signal de position (U_{xH}) de l'étage principal à l'aide d'un observateur(31).

5. Régulateur selon une des revendications 1 à 4, caractérisé en ce que les signaux de position (Uₓᵥ et U_{XH}) sont déterminés par des mesures et en ce que le signal de vitesse U_{xV} est déterminé par différentiation (élément différentiateur 33) du signal de position correspondant (Uₓᵥ).

6. Régulateur selon les revendications 1 ou 2, dans lequel d'une manière connue le régulateur de position pour l'étage préliminaire comporte un régulateur PID, dont l'élément proportionnel et l'élément intégral sont reliés du côté de l'entrée et constituent l'entrée de valeur de consigne du régulateur PID, le signal de position de l'étage préliminaire est appliqué comme signal de valeur réelle à l'élément proportionnel, à l'élément intégral et à l'élément de différentiation et sa sortie du régulateur commande la position de la vanne d'étage préliminaire, caractérisé en ce qu'on amène comme signaux de grandeurs d'état le signal de position (Uₓᵥ) de la vanne d'étage préliminaire (2) au régulateur d'état (25) et le signal se présentant à la sortie de l'élément de différentiation (D), comme signal de vitesse ( U 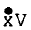 ) de la vanne d'étage préliminaire (2) au régulateur d'état (25) et en ce que l'entrée de valeur de consigne (35) du régulateur PID (34) est connecté à la sortie du régulateur d'état (25) ou au circuit combinatoire (27).
